# DEMANDE DE BREVET EUROPEEN

(11) **EP 2 151 791 A1**
(43) Date de publication de la demande: **10.02.2010**
(21) Numéro de dépôt: 09009255.2
(22) Date de dépôt: 16.07.2009
(51) Int. Cl.: G06Q 10/00

(54) **Procédé amélioré pour organiser la maintenance d'aeronefs**

(30) Priorité: 28.07.2008 FR 0804288
(71) Demandeur: EUROCOPTER, 13725 Marignane Cédex (FR)
(72) Inventeur: Maisonneuve, Pierre-Loic, 13008 Marseille (FR); Glade, Mathieu, 83110 Sanary-Sur-Mer (FR); Ghelam, Samir, 13014 Marseille (FR); Lyonnet, Patrick, 42800 Sainte-Croix-en-Jarez (FR)
(74) Mandataire: GPI & Associés

(57) **Abrégé**

La présente invention concerne un procédé pour gérer la maintenance d'un aéronef en définissant un programme recommandé d'entretien de l'aéronef, ledit programme recommandé d'entretien déterminant les échéances de maintenance en utilisant des données primaires provenant de la conception et des essais en vol des différents équipements et/ou éléments de l'aéronef,
**caractérisé en ce qu**'il consiste à :
- utiliser et enregistrer des données d'utilisation effective de l'aéronef,
- utiliser des moyens de calcul pour recalculer à l'aide d'au moins un algorithme les échéances de maintenance, en fonction des données d'utilisation effective,
- et à mettre à jour le programme recommandé d'entretien.

## Description

La présente invention se rapporte au domaine technique général de la maintenance des appareils ou aéronefs, et en particulier des hélicoptères.

La présente invention concerne notamment la planification des opérations de maintenance et l'édition de programmes recommandés d'entretien pour les aéronefs.

Actuellement, la maintenance d'un aéronef est par exemple déterminée lors de sa phase de conception. La maintenance est alors décrite dans un programme recommandé d'entretien (PRE) où les échéances de maintenance sont calculées en fonction d'une utilisation théorique de l'aéronef couvrant un maximum de comportements critiques. Cette utilisation théorique est identique pour tous les appareils du même type, peu importe leur exploitation effective et réelle de la part de l'acheteur.

Une telle situation peut conduire à des surcoûts en matière de maintenance, notamment pour des appareils faiblement utilisés. L'usage réel du client n'est pas pris en compte dans les programmes recommandés d'entretien connus.

En outre, les systèmes de surveillances embarqués sur les appareils ne donnent pas d'information quant à une estimation de l'usure ou de l'endommagement des pièces surveillées au fil du temps.

Par ailleurs, les programmes recommandés d'entretien connus reflètent d'une part la complexité croissante des machines et d'autre part la multiplication des tâches de maintenance spécifiques. La gestion de la maintenance devient de plus en plus compliquée pour un opérateur.

L'objet de la présente invention vise par conséquent à remédier aux inconvénients précités et à proposer un nouveau procédé de gestion de la maintenance, facilitant la planification des interventions pour les opérateurs.

Un autre objet de la présente invention vise à proposer un nouveau procédé de gestion de la maintenance permettant de tenir compte de l'usage effectif et individualisé de chaque appareil.

Un autre objet de la présente invention vise à proposer un nouveau procédé de gestion de la maintenance permettant d'estimer la durée de vie restante, en temps réel, des pièces d'un appareil.

Un autre objet de la présente invention vise à proposer un nouveau procédé de gestion de la maintenance permettant de diminuer les coûts liés à la maintenance de l'aéronef.

Les objets assignés à l'invention sont atteints à l'aide d'un procédé, pour gérer la maintenance d'au moins un aéronef en définissant un programme recommandé d'entretien de l'aéronef, ledit programme recommandé d'entretien déterminant les échéances de maintenance en utilisant des données primaires provenant de la conception et des essais en vol des différents équipements et/ou éléments de l'aéronef, **caractérisé en ce qu**'il consiste à :
- utiliser et enregistrer des données d'utilisation effective de l'aéronef,
- utiliser des moyens de calcul pour recalculer à l'aide d'au moins un algorithme les échéances de maintenance, en fonction des données d'utilisation effective,
- et à mettre à jour le programme recommandé d'entretien.

Selon un exemple de mise en oeuvre, le procédé conforme à l'invention consiste à mettre à jour le programme recommandé d'entretien en temps réel ou après chaque utilisation effective de l'aéronef.

Selon un exemple de mise en oeuvre, le procédé conforme à l'Invention consiste à déterminer les paramètres de dégradation influents, représentatifs des modes de dégradation de l'aéronef et à surveiller lesdits paramètres de dégradation.

Selon un exemple de mise en oeuvre, le procédé conforme à l'invention consiste à utiliser, en tant que données d'utilisation effective, des données d'usage et de santé enregistrées par des systèmes de surveillance embarqués de l'aéronef.

Les données d'usage et de santé sont par exemple réparties en cinq familles comprenant :
- des données se rapportant aux charges représentant les couples et les moments appliqués sur les éléments mécaniques de l'aéronef,
- des données se rapportant à la lubrification des pièces mécaniques, de genre mesures du pouvoir lubrifiant de l'huile et degré de pollution de l'huile,
- des données se rapportant à l'environnement du genre climat, températures, pressions et altitudes,
- des données se rapportant aux phases de vol, incluant les efforts aérodynamiques et les vibrations,
- et des données de retour d'expérience se rapportant à la santé d'un aéronef ou d'une flotte d'aéronefs.

Selon un exemple de mise en oeuvre, le procédé conforme à l'invention consiste à déterminer des valeurs seuils pour les paramètres de dégradation influents et à vérifier au cours du cycle de vie si ces seuils sont dépassés par lesdits paramètres.

Selon un exemple de mise en oeuvre, le procédé conforme à l'invention consiste à déterminer un éventuel crédit de maintenance accordé à l'utilisateur, en fonction des conclusions du traitement des paramètres de dégradation influents.

Selon un exemple de mise en oeuvre, le procédé conforme à l'invention consiste à utiliser et à analyser les données d'usage et de santé enregistrées, pour suivre les modes de dégradation des différents éléments ou équipements constitutifs de l'aéronef, notamment des pièces mécaniques et pour déterminer un niveau ou un pourcentage d'usure desdits éléments ou équipements et/ou une information se rapportant au potentiel de vie restante desdits éléments ou équipements.

Selon un exemple de mise en oeuvre, le procédé conforme à l'invention consiste à suivre les modes de dégradation en utilisant au moins un modèle de calcul prédéfini, par exemple lors de la conception de l'aéronef, pour analyser les données d'usage et de santé,

Selon un exemple de mise en oeuvre, le procédé conforme à l'invention consiste à utiliser un modèle de calcul d'endommagement et un modèle de calcul d'accumulation d'endommagement des pièces mécaniques constitutives de l'aéronef.

Selon un exemple de mise en oeuvre, le procédé conforme à l'invention consiste à utiliser des valeurs d'entrée enregistrées en temps réel et issues des données d'usage et de santé pour recalculer l'usure ou l'endommagement des pièces et ce grâce au modèle de calcul d'endommagement.

Les objets assignés à la présente invention sont également atteints à l'aide d'une unité de surveillance, de calcul et de décision pour un aéronef du genre hélicoptère et pour mettre en oeuvre le procédé précité, comportant:
- un ensemble de capteurs permettant de capturer des paramètres d'entrée nécessaires au calcul dynamique des échéances de maintenance,
- des moyens de calcul, du genre microcontrôleur, pour héberger au sol ou en embarqué un ou plusieurs algorithmes intégrant un ou plusieurs modèles de calcul du genre algorithmes de calcul dynamique des échéances,
- des moyens d'enregistrement, par exemple reliés au microcontrôleur, aux capteurs et/ou à d'autres sources d'informations pour enregistrer des données d'usage et de santé,
- et des moyens de mise en forme des données d'usage et de santé susceptibles d'éditer au sol ou en embarqué un programme recommandé d'entretien dynamique et mis à jour.

Selon un mode de réalisation conforme à l'invention, l'unité de surveillance de calcul et de décision est associée à des moyens de transmission pour transmettre les données d'usage et de santé et/ou le programme recommandé d'entretien mis à jour à au moins une base fixe au sol.

Selon un exemple de réalisation, l'unité de surveillance, de calcul et de décision conforme à l'invention comprend d'une part sous forme de boîte noire embarquée, les moyens d'enregistrement et d'autre part une station de traitement de données au sol.

Les objets assignés à l'invention sont également atteints à l'aide d'un hélicoptère comportant une unité de surveillance, de calcul et de décision telle que précitée.

Le procédé conforme à l'invention présente l'avantage d'être personnalisé pour chaque aéronef et d'éditer un programme recommandé d'entretien dynamique, se basant sur l'utilisation effective et réelle de chaque aéronef.

Le procédé conforme à l'invention présente l'avantage d'automatiser au maximum la planification des tâches de maintenance, grâce à un programme recommandé d'entretien dynamique, mis à jour au fil du temps en fonction de l'utilisation effective de l'aéronef.

Le procédé conforme à l'Invention présente l'avantage qu'il permet d'optimiser l'utilisation des pièces et d'augmenter leur potentiel, mettant pleinement à profit leurs propriétés et leurs qualités.

Un autre avantage est obtenu dans la mesure où le programme recommandé d'entretien dynamique permet d'autoriser le décollage et la réalisation de missions lorsque les endommagements ou les usures des pièces ne sont pas encore critiques alors que les potentiels de durée de vie du planning de maintenance sont dépassés. Le procédé conforme à l'invention permet également d'optimiser la gestion du stock de pièces de rechange.

Un autre avantage est obtenu dans la mesure où le programme recommandé d'entretien dynamique permet de pronostiquer l'apparition d'un endommagement de pièce qui va donc être usée de façon prématurée, par exemple suite à des utilisations particulières de l'aéronef. Ceci permet d'imposer une opération de maintenance à des fins de sécurité, ladite opération de maintenance pouvant être mise en place avant l'échéance de maintenance programmée initialement dans le programme recommandé d'entretien.

Un autre avantage lié au procédé conforme à l'invention, réside dans une diminution de l'indisponibilité de l'aéronef pour des opérations de maintenance non nécessaires et par conséquent dans une diminution des coûts d'exploitation de l'aéronef ainsi que de l'ensemble d'une flotte.

L'invention et ses avantages apparaîtront avec plus de détails dans le cadre de la description qui suit avec des exemples de mise en oeuvre donnés à titre illustratif en référence aux figures annexées qui représentent :
- la figure 1, illustre schématiquement un exemple de mise en oeuvre du procédé conforme à l'invention pour établir un programme recommandé d'entretien,
- la figure 2, illustre schématiquement des exemples d'étapes de traitement de données permettant dans l'établissement d'un programme recommandé d'entretien, de fournir une information sur la fiabilité résiduelle d'une pièce ou d'un équipement,
- et la figure 3 illustre de façon schématique un exemple de réalisation d'une unité de surveillance, de calcul et de décision conforme à l'invention.

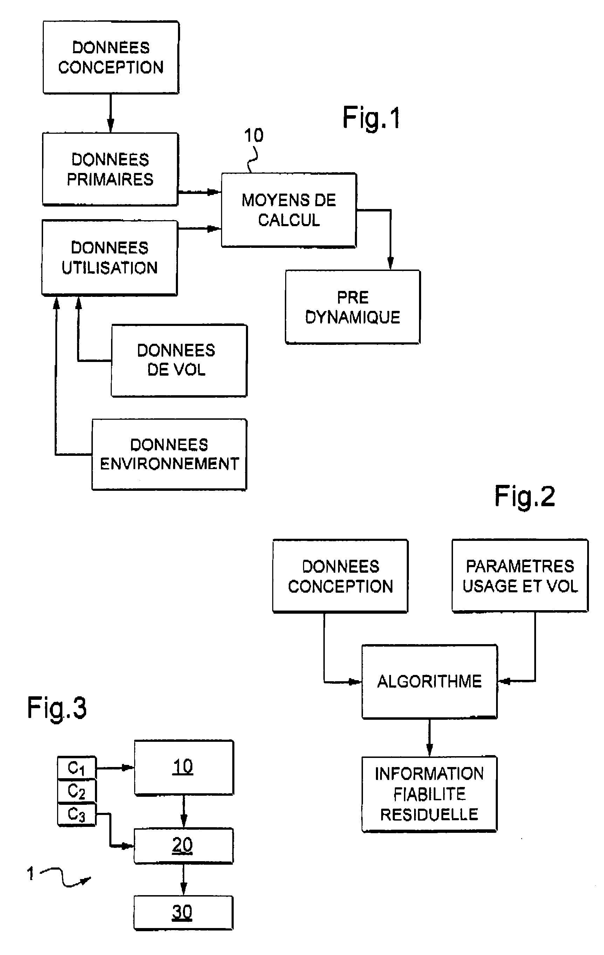

Le procédé conforme à l'invention et illustré à la figure 1 permet de gérer la maintenance d'un aéronef en définissant un programme recommandé d'entretien PRE de l'aéronef,

Le programme recommandé d'entretien PRE détermine les échéances de maintenance en utilisant des données primaires provenant de la conception de pièces et des essais en vol des différents équipements et/ou éléments de l'aéronef.

Le procédé conforme à l'invention consiste à utiliser et à enregistrer des données d'utilisation effective de l'aéronef. Il s'agit de données liées aux paramètres d'usage et de vol.

Le procédé conforme à l'invention utilise des moyens de calcul pour recalculer à l'aide d'au moins un algorithme les échéances de maintenance, en fonction des données d'utilisation effective et met à jour le programme recommandé d'entretien PRE. On obtient ainsi un PRE dynamique.

Le procédé conforme à l'invention consiste de préférence à mettre à jour le programme recommandé d'entretien PRE en temps réel ou après chaque utilisation effective de l'aéronef.

Le procédé conforme à l'invention consiste à déterminer les paramètres de dégradation influents, représentatifs des modes de dégradation de l'aéronef et à surveiller lesdits paramètres de dégradation grâce aux données d'utilisation effective de l'aéronef.

Dans le cadre du procédé conforme à l'invention, on utilise, en tant que données d'utilisation effective, des données d'usage et de santé enregistrées par exemple grâce à des systèmes de surveillance embarqués de l'aéronef.

Les données d'usage et de santé sont par exemple réparties en cinq familles présentées ci-après, comprenant :
- des données se rapportant aux charges représentant les couples et les moments appliqués sur les éléments mécaniques de l'aéronef,
- des données se rapportant à la lubrification des pièces mécaniques, de genre mesures du pouvoir lubrifiant de l'huile et degré de pollution de l'huile,
- des données se rapportant à l'environnement du genre climat, températures, pressions et altitudes,
- des données se rapportant aux phases de vol, incluant les efforts aérodynamiques et les vibrations,
- et des données de retour d'expérience se rapportant à la santé d'un aéronef ou d'une flotte d'aéronefs.

Le procédé conforme à l'invention consiste selon un exemple de mise en oeuvre à déterminer des valeurs seuils pour les paramètres de dégradation Influents et à vérifier au cours du cycle de vie, si ces seuils ont été dépassés par un ou des paramètres de dégradation influents. La constatation de tels dépassements influencera la mise à jour du plan recommandé d'entretien dynamique.

Le procédé conforme à l'invention peut aussi consister à déterminer un éventuel crédit de maintenance accordé à l'utilisateur en fonction des conclusions du traitement des paramètres de dégradation influents. Des opérations de maintenance peuvent ainsi être reportées sans que cela n'augmente les risques de dysfonctionnements ou de pannes.

Le procédé conforme à l'invention consiste à utiliser et à analyser les données d'usage et de santé enregistrées, de manière à suivre les modes de dégradation des différents éléments ou équipements constitutifs de l'aéronef, notamment des pièces mécaniques et de manière à déterminer un niveau ou un pourcentage d'usure desdits éléments ou équipements et/ou une information se rapportant au potentiel de vie restante desdits éléments ou équipements.

Le procédé conforme à l'invention consiste également à suivre les modes de dégradation en utilisant au moins un modèle de calcul prédéfini, par exemple lors de la conception de l'aéronef, pour analyser les données d'usage et de santé.

Le procédé utilise à cette fin un modèle de calcul d'endommagement et un modèle de calcul d'accumulation d'endommagement des pièces mécaniques constitutives de l'aéronef.

Le procédé conforme à l'invention consiste à utiliser des valeurs d'entrée enregistrées en temps réel et issues des données d'usage et de santé, pour recalculer l'usure ou l'endommagement des pièces grâce au modèle de calcul d'endommagement.

Les algorithmes susceptibles d'être utilisés pour effectuer ces opérations de calcul reposent sur la compréhension de l'ensemble des modes de dégradation existant dans le cadre des ensembles dynamiques par exemple d'un hélicoptère.

Le procédé conforme à l'invention permet d'obtenir et de mettre à jour les durées entre chaque maintenance, dites « *Time Between Overhaul* » TBO. Pour l'extension de ces durées, la mise à jour et le calcul des TBO font intervenir de préférence plusieurs algorithmes. Chaque algorithme représente un mode de dégradation donné et chaque pièce constituant l'ensemble mécanique sujet à ce mode de dégradation est répertoriée. L'algorithme en question prend en compte la conception de la pièce (forme, matériau, jeu mécanique, état de surface etc...), son utilisation (correspondant à la fonction qu'elle remplit) et les contraintes qu'elle subit (couple, lubrification ou autre contrainte figurant dans les quatre familles énumérées ci-dessus).

Chaque mode de dégradation est ainsi conceptualisé par un algorithme se basant sur une loi mathématique et/ou physique, un seuil, un avis d'expert, une loi statistique de fiabilité ou autre.

En se reportant par exemple à la figure 2, il ressort que les entrées d'un tel algorithme sont les données se rapportant à la conception de la pièce et les données se rapportant aux paramètres d'usage et de vol, à savoir les données relatives à l'environnement extérieur à la pièce, enregistrées en temps réel.

La sortie d'un tel algorithme est par exemple une information de volume d'usure ou de pourcentage d'endommagement ou de fiabilité résiduelle correspondant à une durée de vie restante.

Les moyens de calcul corrèlent par exemple un ensemble de lois physiques de modélisation des contacts entre pièces, connues du monde scientifique, dans le but de calculer un potentiel de vie restant et d'en déduire une nouvelle échéance ou une augmentation d'heures de vol.

Les algorithmes peuvent être classés en trois catégories, à savoir :
- les algorithmes à base de seuil, reposant sur un suivi de tendance d'un ou d'une corrélation de paramètres influents grâce à l'historique compilé dans une base de données, lesdits algorithmes réalisant une courbe sur l'ensemble de l'historique et si la courbe dépasse un seuil donné, on dispose alors d'une information d'usure,
- les algorithmes à base de modèle de mécanique - physique, reposant sur la compréhension physique du mode de dégradation, par exemple les efforts de contact entre deux dents d'engrenages sont modélisés par des lois physiques (*pression de Hertz*), permettant de calculer une limite d'endurance des engrenages, lesdits algorithmes se rapportant plus précisément à une modélisation de l'usure au-delà de la limite d'endurance,
- et les algorithmes à base de statistique flabiliste, détournant les lois fiabilistes connues dans le but de prédire l'apparition d'un phénomène ou d'un mode de dégradation, les lois statistiques devenant ainsi dynamiques en fonction des paramètres enregistrés en continu (loi Welbull et Cox, à titre d'exemple).

La présente invention concerne également une unité de surveillance, de calcul et de décision 1 pour un aéronef du genre hélicoptère, mettant en oeuvre le procédé conforme à l'Invention.

L'unité de surveillance, de calcul et de décision 1 conforme à l'invention comporte un ensemble de capteurs C1, C2, C3 permettant de capturer des paramètres d'entrée nécessaires au calcul dynamique des échéances de maintenance.

L'unité de surveillance, de calcul et de décision 1 comporte également des moyens de calcul 10, du genre microcontrôleur, pour héberger au sol ou en embarqué un ou plusieurs algorithmes intégrant un ou plusieurs modèles de calcul du genre algorithmes de calcul dynamique des échéances.

L'unité de surveillance, de calcul et de décision 1 comporte également des moyens d'enregistrement 20, par exemple reliés au microcontrôleur, aux capteurs C1, C2, C3 et/ou à d'autres sources d'informations pour enregistrer des données d'usage et de santé.

L'unité de surveillance, de calcul et de décision 1 comporte également des moyens de mise en forme 30 des données d'usage et de santé susceptibles d'éditer au sol ou en embarqué un programme recommandé d'entretien PRE dynamique et mis à jour.

Les moyens de mise en forme 30 sont par exemple intégrés dans une station de traitement de données au sol. Les moyens de mise en forme 30 peuvent aussi être embarqués.

L'unité de surveillance, de calcul et de décision 1 conforme à l'invention est par exemple associée à des moyens de communication ou de transmission pour transmettre les données d'usage et de santé et/ou le programme recommandé d'entretien PRE mis à jour à au moins une base fixe au sol et/ou au client exploitant l'aéronef. Cette transmission peut se faire via un portail internet. Une transmission, par l'intermédiaire d'une liaison sans fil des données d'usage et de santé de l'aéronef vers les moyens de mise en forme ou vers les moyens de calcul au sol peut également être envisagée.

A titre d'exemple, les données enregistrées sont stockées dans une mémoire interne de l'aéronef durant le vol, puis déchargées dans un moyen au sol lors de l'arrêt de la machine à l'aide de moyens de communications du genre carte mémoire, liaison sans fil ou autre.

Ces données brutes ou mises en forme entièrement ou partiellement, sont ensuite analysées et ajoutées à une base de données regroupant l'ensemble des déchargements de données effectués depuis la mise en service de l'aéronef.

L'unité de surveillance, de calcul et de décision 1 comprend par exemple d'une part sous forme de boîte noire embarquée, les moyens d'enregistrement et les capteurs C1, C2, C3 et d'autre part une station de traitement de données au sol ou un serveur.

Naturellement, la présente invention est sujette à de nombreuses variations quant à sa mise en oeuvre. Bien que plusieurs modes de réalisations aient été décrits, on comprend bien qu'il n'est pas concevable d'Identifier de manière exhaustive tous les modes possibles. Il est bien sûr envisageable de remplacer un moyen décrit par un moyen équivalent ou une étape décrite par une étape équivalente, sans sortir du cadre de la présente invention.

## Revendications

1. Unité de surveillance, de calcul et de décision (1) pour un aéronef du genre hélicoptère, mettant en oeuvre un procédé pour gérer la maintenance d'au moins un aéronef en définissant un programme recommandé d'entretien de l'aéronef, ledit programme recommandé d'entretien déterminant les échéances de maintenance en utilisant des données primaires provenant de la conception et des essais en vol des différents équipements et/ou éléments de l'aéronef, ledit procédé consistant à :
- utiliser et enregistrer des données d'utilisation effective de l'aéronef,
- utiliser des moyens de calcul pour recalculer à l'aide d'au moins un algorithme les échéances de maintenance, en fonction des données d'utilisation effective,
- et à mettre à jour le programme recommandé d'entretien,
**caractérisée en ce qu'**elle comporte :
- un ensemble de capteurs (C1, C2, C3) permettant de capturer des paramètres d'entrée nécessaires au calcul dynamique des échéances de maintenance,
- des moyens de calcul (10), du genre microcontrôleur, pour héberger au sol ou en embarqué un ou plusieurs algorithmes intégrant un ou plusieurs modèles de calcul du genre algorithmes de calcul dynamique des échéances,
- des moyens d'enregistrement (20), par exemple reliés au microcontrôleur, aux capteurs (C1, C2, C3) et/ou à d'autres sources d'informations pour enregistrer des données d'usage et de santé,
- et des moyens de mise en forme (30) des données d'usage et de santé susceptibles d'éditer au sol ou en embarqué un programme recommandé d'entretien PRE dynamique et mis à jour.

2. Unité de surveillance, de calcul et de décision (1) selon la revendication 1,
**caractérisée en ce qu'**elle est associée à des moyens de transmission pour transmettre les données d'usage et de santé et/ou le programme recommandé d'entretien PRE mis à jour à au moins une base fixe au sol.

3. Unité de surveillance, de calcul et de décision (1) selon la revendication 1 ou 2,
**caractérisée en ce qu'**elle comprend d'une part sous forme de boîte noire embarquée les moyens d'enregistrement et d'autre part une station de traitement de données au sol.

4. Unité de surveillance selon l'une quelconque des revendications 1 à 3,
**caractérisée en ce que** ledit procédé consiste à mettre à jour le programme recommandé d'entretien en temps réel ou après chaque utilisation effective de l'aéronef.

5. Unité de surveillance selon l'une quelconque des revendications précédentes,
**caractérisée en ce que** ledit procédé consiste à déterminer les paramètres de dégradation influents, représentatifs des modes de dégradation de l'aéronef et à surveiller lesdits paramètres de dégradation.

6. Unité de surveillance selon la revendication 5,
**caractérisée en ce que** ledit procédé consiste à utiliser, en tant que données d'utilisation effective, des données d'usage et de santé enregistrées par des systèmes de surveillance embarqués de l'aéronef.

7. Unité de surveillance selon la revendication 6,
**caractérisée en ce que** les données d'usage et de santé sont réparties en cinq familles comprenant :
- des données se rapportant aux charges représentant les couples et les moments appliqués sur les éléments mécaniques de l'aéronef,
- des données se rapportant à la lubrification des pièces mécaniques, de genre mesures du pouvoir lubrifiant de l'huile et degré de pollution de l'huile,
- des données se rapportant à l'environnement du genre climat, températures, pressions et altitudes,
- des données se rapportant aux phases de vol, incluant les efforts aérodynamiques et les vibrations,
- et des données de retour d'expérience se rapportant à la santé d'un aéronef ou d'une flotte d'aéronefs.

8. Unité de surveillance selon l'une quelconque des revendications 5 à 7,
**caractérisée en ce que** ledit procédé consiste à déterminer des valeurs seuils pour les paramètres de dégradation influents et à vérifier au cours du cycle de vie si ces seuils sont dépassés par lesdits paramètres.

9. Unité de surveillance selon l'une quelconque des revendications 5 à 8,
**caractérisée en ce que** ledit procédé consiste à déterminer un éventuel crédit de maintenance accordé à l'utilisateur en fonction des conclusions du traitement des paramètres de dégradation influents.

10. Unité de surveillance selon la revendication 6 ou 7,
**caractérisée en ce que** ledit procédé consiste à utiliser et à analyser les données d'usage et de santé enregistrées, pour suivre les modes de dégradation des différents éléments ou équipements constitutifs de l'aéronef, notamment des pièces mécaniques et pour déterminer un niveau ou un pourcentage d'usure desdits éléments ou équipements et/ou une information se rapportant au potentiel de vie restante desdits éléments ou équipements.

11. Unité de surveillance selon la revendication 10,
**caractérisée en ce que** ledit procédé consiste à suivre les modes de dégradation en utilisant au moins un modèle de calcul prédéfini, par exemple lors de la conception de l'aéronef, pour analyser les données d'usage et de santé.

12. Unité de surveillance selon la revendication 11,
**caractérisée en ce que** ledit procédé consiste à utiliser un modèle de calcul d'endommagement et un modèle de calcul d'accumulation d'endommagement des pièces mécaniques constitutives de l'aéronef.

13. Unité de surveillance selon la revendication 12,
**caractérisée en ce que** ledit procédé consiste à utiliser des valeurs d'entrée enregistrées en temps réel et issues des données d'usage et de santé pour recalculer l'usure ou l'endommagement des pièces et ce grâce au modèle de calcul d'endommagement.

14. Procédé pour gérer la maintenance d'au moins un aéronef en définissant un programme recommandé d'entretien de l'aéronef, ledit programme recommandé d'entretien déterminant les échéances de maintenance en utilisant des données primaires provenant de la conception et des essais en vol des différents équipements et/ou éléments de l'aéronef,
**caractérisé en ce qu'**il consiste à :
- utiliser et enregistrer des données d'utilisation effective de l'aéronef,
- utiliser des moyens de calcul pour recalculer à l'aide d'au moins un algorithme les échéances de maintenance, en fonction des données d'utilisation effective,
- et à mettre à jour le programme recommandé d'entretien.

15. Procédé selon la revendication 14,
**caractérisé en ce qu'**il consiste à mettre à jour le programme recommandé d'entretien en temps réel ou après chaque utilisation effective de l'aéronef.

16. Procédé selon la revendication 14 ou 15,
**caractérisé en ce qu'**il consiste à déterminer les paramètres de dégradation influents, représentatifs des modes de dégradation de l'aéronef et à surveiller lesdits paramètres de dégradation.

17. Procédé selon la revendication 16,
**caractérisé en ce qu'**il consiste à utiliser, en tant que données d'utilisation effective, des données d'usage et de santé enregistrées par des systèmes de surveillance embarqués de l'aéronef.

18. Procédé selon la revendication 17,
**caractérisé en ce que** les données d'usage et de santé sont réparties en cinq familles comprenant :
- des données se rapportant aux charges représentant les couples et les moments appliqués sur les éléments mécaniques de l'aéronef,
- des données se rapportant à la lubrification des pièces mécaniques, de genre mesures du pouvoir lubrifiant de l'huile et degré de pollution de l'huile,
- des données se rapportant à l'environnement du genre climat, températures, pressions et altitudes,
- des données se rapportant aux phases de vol, incluant les efforts aérodynamiques et les vibrations,
- et des données de retour d'expérience se rapportant à la santé d'un aéronef ou d'une flotte d'aéronefs.

19. Procédé selon l'une quelconque des revendications 16 à 18.
**caractérisé en ce qu'**il consiste à déterminer des valeurs seuils pour les paramètres de dégradation influents et à vérifier au cours du cycle de vie si ces seuils sont dépassés par lesdits paramètres.

20. Procédé selon l'une quelconque des revendications 16 à 19,
**caractérisé en ce qu'**il consiste à déterminer un éventuel crédit de maintenance accordé à l'utilisateur en fonction des conclusions du traitement des paramètres de dégradation influents.

21. Procédé selon la revendication 17 ou 18,
**caractérisé en ce qu'**il consiste à utiliser et à analyser les données d'usage et de santé enregistrées, pour suivre les modes de dégradation des différents éléments ou équipements constitutifs de l'aéronef, notamment des pièces mécaniques et pour déterminer un niveau ou un pourcentage d'usure desdits éléments ou équipements et/ou une information se rapportant au potentiel de vie restante desdits éléments ou équipements.

22. Procédé selon la revendication 21,
**caractérisé en ce qu'**il consiste à suivre les modes de dégradation en utilisant au moins un modèle de calcul prédéfini, par exemple lors de la conception de l'aéronef, pour analyser les données d'usage et de santé.

23. Procédé selon la revendication 22,
**caractérisé en ce qu'**il consiste à utiliser un modèle de calcul d'endommagement et un modèle de calcul d'accumulation d'endommagement des pièces mécaniques constitutives de l'aéronef.

24. Procédé selon la revendication 23,
**caractérisé en ce qu'**il consiste à utiliser des valeurs d'entrée enregistrées en temps réel et issues des données d'usage et de santé pour recalculer l'usure ou l'endommagement des pièces et ce grâce au modèle de calcul d'endommagement.

25. Hélicoptère comportant une unité de surveillance, de calcul (1) et de décision conforme à l'une quelconque des revendications 1 à 13.
